# EUROPÄISCHE PATENTANMELDUNG

(11) **EP 4 494 450 A1**
(43) Veröffentlichungstag der Anmeldung: **22.01.2025**
(21) Anmeldenummer: 24178499.0
(22) Anmeldetag: 28.05.2024
(51) Int. Cl.: A01F 12/44, A01F 12/395, A01F 7/06

(54) **ABSCHEIDEAGGREGAT FÜR EINEN MÄHDRESCHER**

(30) Priorität: 03.07.2023 DE 102023117474
(71) Anmelder: CLAAS Selbstfahrende Erntemaschinen GmbH, 33428 Harsewinkel (DE)
(72) Erfinder: Diekamp, Andreas, 49176 Hilter (DE); Beckmann, Hermann-Konstantin, 32584 Löhne (DE); Vieregge, Christopher, 32694 Dörentrup (DE)
(74) Vertreter: CLAAS 365FarmNet GmbH

(57) **Zusammenfassung**

Die Erfindung betrifft ein Abscheideaggregat (7) für einen selbstfahrenden Mähdrescher (1), welches nach dem Axialflussprinzip arbeitet, umfassend einen drehbar gelagerten Abscheiderotor (24) der in einem Gehäuse (25) angeordnet ist, das einen mit Öffnungen versehenen Abscheidekorb (26) und einen eine geschlossene Mantelfläche (31) aufweisenden Deckel (27) umfasst, wobei die Mantelfläche (31) auf ihrer dem Abscheiderotor (24) zugewandten Seite stufig ausgeführt ist.

## Beschreibung

Die Erfindung betrifft ein Abscheideaggregat für einen Mähdrescher gemäß dem Oberbegriff des Patentanspruchs 1.

Ein Abscheideaggregat der eingangs genannten Art ist aus der EP 2 428 109 B1 bekannt. Das nach dem Axialflussprinzip arbeitende Abscheideaggregat umfasst einen drehbar gelagerten Abscheiderotor, der in einem Gehäuse angeordnet ist, das mindestens einen mit Öffnungen versehenen Abscheidekorb, der einen Abscheidebereich des Abscheideaggregates bildet, und einen eine geschlossene Mantelfläche aufweisenden Deckel umfasst. Der exzentrisch angeordnete Deckel weist auf seiner dem Abscheiderotor zugewandten Seite eine Vielzahl von koaxial zur Längsachse des Abscheiderotors spiralförmig nebeneinander angeordnete Leitelemente auf, die sich abschnittsweise in radialer Richtung des Deckels erstrecken. Ein dem Abscheideaggregat zugeführter Erntegutstrom hebt auf Grund der Rotationskräfte vom Abscheiderotor ab und bewegt sich dabei, durch den Abscheiderotor und die Leitelemente geführt, in axialer Richtung und in Umfangsrichtung entlang des Gehäuses. Die in der sich an der Gehäuseinnenseite ausbildenden Dreschmatte enthaltenen Restkörnerwerden im Bereich des Abscheidekorbes ausgeschieden. Den spiralförmig angeordneten Leitelementen auf der Innenseite des Deckels kommt die Aufgabe zu, das durch den Abscheiderotor in Umfangsrichtung beschleunigte Erntegut zu einer Abgabestelle hin zu leiten. Die von dem Abscheiderotor aufgebrachten Fliehkräfte wirken gleichermaßen auf das aus einem Erntegutstrom abzuscheidende Korn wie auch das in dem Erntegutstrom enthaltene Stroh ein. Die EP 2 428 109 B1 hat erkannt, dass dabei ein Verdichtungseffekt des Strohs an der Abscheidefläche des Abscheidekorbes auftreten kann, durch den sich eine Strohmatte ausbildet, die das Aus- beziehungsweise Hindurchtreten des Korns durch die Strohmatte verhindert.

Die Abscheideleistung variiert in Abhängigkeit von verschiedenen erntegutspezifischen wie auch abscheideaggregatspezifischen Parametern. Eine Erhöhung der Abscheideleistung eines zuvor beschriebenen Abscheideaggregates beruht auf der Vergrößerung der Abscheidefläche, der Erhöhung der Abscheiderotordrehzahl, der Ausgestaltung der Abscheidekörbe sowie der Erhöhung von Gutumläufen im Abscheideaggregat. Dabei sind der Vergrößerung der Abscheideflächen durch den nur begrenzt zur Verfügung stehenden Bauraum Grenzen gesetzt, so dass diese Maßnahme schnell an Grenzen stößt. Eine Erhöhung der Abscheiderotordrehzahl und damit der Fliehkräfte geht mit einer Erhöhung der Leistungsaufnahme des Abscheideaggregates einher und führt zu einer zunehmenden Zerstörung des Strohs.

Deshalb schlägt die EP 2 428 109 B1 zur Leistungssteigerung des Abscheideaggregats vor, ein rampenförmiges Gutstromablenkelement an dem Deckel anzuordnen. Das Gutstromablenkelement befindet sich in Gutflussrichtung betrachtet am Ende des Deckels und ist dem Abscheidekorb vorgeordnet. Hierdurch wird der Erntegutstrom von der Oberfläche des Deckels abgehoben und bei seinem anschließenden Wiederauftreffen auf eine den Abscheiderotor umgebende Oberfläche entmischt und aufgelockert, sodass der nachteilige oben beschriebene Verdichtungseffekt reduziert wird.

Der Erfindung liegt die Aufgabe zu Grunde, ein Abscheideaggregat der eingangs genannten Art bereitzustellen, welches sich unter Beibehaltung einer bestehenden Abscheidefläche durch eine weiter erhöhte Abscheideleistung auszeichnet.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Abscheideaggregat für einen selbstfahrenden Mähdrescher vorgeschlagen, welches nach dem Axialflussprinzip arbeitet, umfassend einen drehbar gelagerten Abscheiderotor der in einem Gehäuse angeordnet ist, das einen mit Öffnungen versehenen Abscheidekorb und einen eine geschlossene Mantelfläche aufweisenden Deckel umfasst, wobei die Mantelfläche auf ihrer dem Abscheiderotor zugewandten Seite stufig ausgeführt ist

Die Erfindung hat viele Vorteile. Ein entlang der Mantelfläche geführter Erntegutstrom erfährt durch die stufig ausgeführte Mantelfläche Impulse, die den Erntegutstrom von der Mantelfläche ablenken. Hierdurch wird die Reibung an der Mantelfläche reduziert, sodass sich eine Leistungsersparnis beim Betrieb des Abscheideaggregats ergibt. Weiterhin führen die wiederholt in den Erntegutstrom eingebrachten Impulse zu einer verbesserten Entmischung des Ernteguts. Durch ein wiederholtes Wiederauftreffen des Erntegutstroms auf die Mantelfläche nach einer Ablenkung, wird der Erntegutstrom mehrfach an der Mantelfläche abgewälzt und eine Verdichtung des Ernteguts vermieden.

Eine vorteilhafte Weiterbildung sieht vor, dass die stufig ausgeführte Mantelfläche eine Mehrzahl von in Umfangsrichtung des Gehäuses hintereinander angeordneten Stufen umfasst. Die von den Stufen ausgebildete stufige Mantelfläche bewirkt eine besonders vorteilhafte Durchmischung des Ernteguts. Die Stufen können eine gezackte Mantelfläche formen. Die Stufen können sich jeweils achsparallel zu der Längsachse des Abscheiderotors erstrecken.

Eine vorteilhafte Weiterbildung sieht vor, dass die stufig ausgeführte Mantelfläche eine Mehrzahl von in Umfangsrichtung des Gehäuses hintereinander angeordneten Kanten umfasst. Die von den Kanten ausgebildete stufige Mantelfläche bildet eine alternative Ausführung zu den Stufen. Die Kanten bewirken eine besonders vorteilhafte Durchmischung des Ernteguts. Die Kanten können sich jeweils achsparallel zu der Längsachse des Abscheiderotors erstrecken.

Gemäß einer vorteilhaften Weiterbildung kann die Mantelfläche eine Mehrzahl von flächigen Abschnitten aufweisen, die jeweils unter Ausbildung einer Kante miteinander verbunden sind. Besonders bevorzugt ist es, wenn die Mantelfläche zumindest 6 Kanten aufweist.

Um einer Verdichtung des Ernteguts besonders wirksam entgegenzuwirken und die Reibung an der Mantelfläche weiter zu reduzieren, sieht eine vorteilhafte Weiterbildung vor, dass die Mantelfläche über die gesamte sich in Umfangsrichtung erstreckende Ausdehnung gestuft ausgeführt ist.

Eine besonders vorteilhafte Ausgestaltung sieht vor, dass die Mantelfläche auf ihrer dem Abscheiderotor zugewandten Seite eine Vielzahl von koaxial zur Längsachse des Abscheiderotors nebeneinander angeordneten Leitelementen aufweist, die sich abschnittsweise in Umfangsrichtung des Deckels erstrecken, wobei zwischen zwei benachbarten Leitelementen zumindest abschnittsweise ein gestufter Kanal ausgebildet ist. In den Kanälen kann der Erntegutstrom zum einen in Umfangsrichtung und zugleich in axialer Richtung durch das Abscheideaggregat geleitet werden. Die gestufte Ausführung der Kanäle bewirkt zusätzlich eine vorteilhafte Entmischung des Erntegutstroms.

Vorzugsweise kann die Mantelfläche einteilig ausgebildet sein.

Gemäß einer besonders bevorzugten Ausgestaltung ist vorgesehen, dass an der Mantelfläche ein Rechen angeordnet ist. Dieser Rechen kann eine Mehrzahl von zumindest abschnittsweise in radialer Richtung hin zu dem Abscheiderotor vorstehenden Fingern umfassen. Hierdurch ist eine zusätzliche Durchmischung des Ernteguts innerhalb des Abscheideaggregats erreichbar. In besonders vorteilhafter Weise kann der Rechen in bestimmungsgemäßer Gutflussrichtung des Abscheideaggregats gesehen den Stufen nachgeordnet sein. Weiterhin kann der Rechen in bestimmungsgemäßer Gutflussrichtung des Abscheideaggregats gesehen den Kanten nachgeordnet sein.

Die vorliegende Erfindung wird nachstehend anhand eines in den Zeichnungen dargestellten Ausführungsbeispiels näher erläutert.
- Figur 1: eine schematische Darstellung eines selbstfahrenden Mähdreschers in Seitenansicht;
- Figur 2: eine Frontalsicht eines Abscheideaggregates mit einer gestuften Mantelfläche;
- Figur 3a: eine schematische Ansicht einer gestuft ausgeführten Mantelfläche mit einer Mehrzahl von Stufen;
- Figur 3b: eine schematische Ansicht einer gestuft ausgeführten Mantelfläche mit einer Mehrzahl von Kanten;
- Figur 4: eine schematische Ansicht einer Mantelfläche mit einem Rechen.

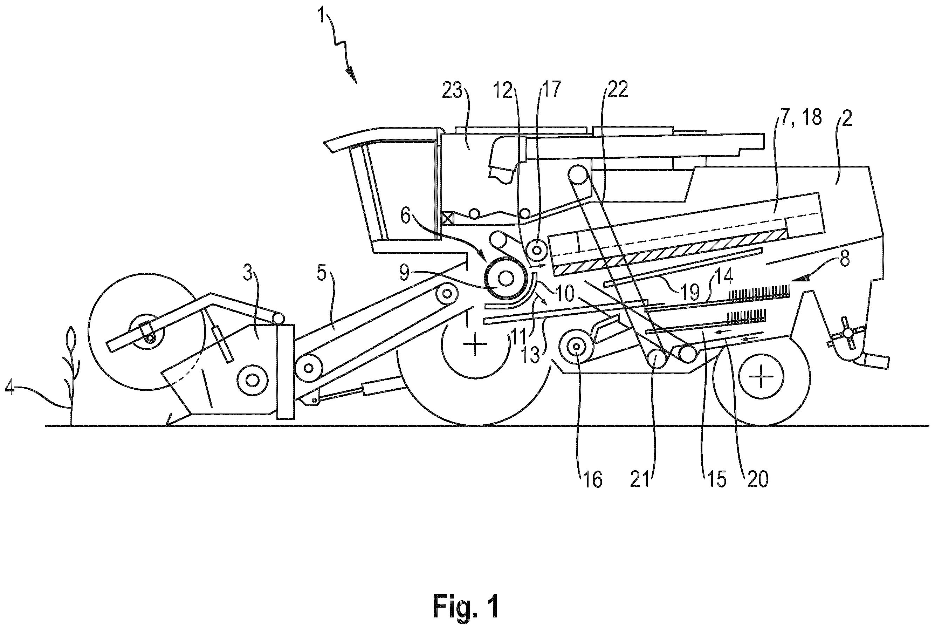

Fig. 1 zeigt eine schematische Darstellung eines selbstfahrenden Mähdreschers 1 in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem Vorsatzgerät 3 in an sich bekannter Weise Erntegut 4 von einem Feld auf.

Das aufgenommene Erntegut 4 wird über einen Schrägförderer 5 einer Dresch- und Trenneinrichtung übergeben. Die Dresch- und Trenneinrichtung umfasst eine nach dem Tangentialflussprinzip arbeitende Dreschvorrichtung 6, ein der Dreschvorrichtung 6 nachgeordnetes Abscheideaggregat 7 und eine Siebanordnung 8 als Teil einer Reinigungsvorrichtung des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil, bestehende zweite Teilstrom 12 wird mittels einer Zuführtrommel 17 zu dem noch näher zu beschreibenden Abscheideaggregat 7 geleitet. Ein im Wesentlichen aus einem Gemisch aus Körnern und Ährenbruchstücken sowie Kurzstroh bestehender Erntegutstrom wird von dem Abscheideaggregat 7 abgeschieden und über einen sogenannten Rücklaufboden 19 und den Vorbereitungsboden 13 an die Siebanordnung 8 übergeben.

In der Siebanordnung 8 wird schließlich in an sich bekannter Weise ein gereinigter Körnerstrom 18 abgeschieden und über einen Auffang- und Führungsboden 20 einer Kornförderschnecke 21 zugeführt, von wo aus er mittels eines Elevators 22 in den Korntank 23 gefördert wird.

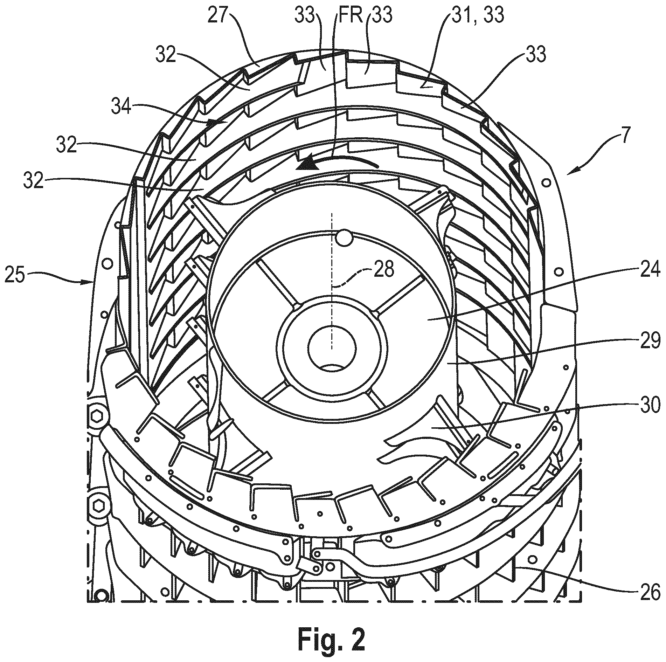

In Fig. 2 ist eine Frontalsicht eines nach dem Axialflussprinzip arbeitenden Abscheideaggregates 7 eines Mähdreschers 1 dargestellt. Das Abscheideaggregat 7 weist einen drehbar gelagerten Abscheiderotor 24 auf, der von einem parallel zu dem Abscheiderotor 24 angeordneten Gehäuse 25 umgeben ist. Das Gehäuse 25 umfasst mindestens einen siebartigen Abscheidekorb 26, der den Abscheidebereich des Abscheideaggregates 7 bildet, sowie einen Deckel 27, die den Abscheiderotor 24 in Umfangsrichtung gesehen jeweils etwa hälftig umgeben. Vorzugsweise sind mehrere Abscheidekörbe 26 parallel zu der Längsachse 28 des Abscheiderotors 24 in axialer Richtung hintereinander liegend angeordnet. Der Abscheiderotor 24 ist zum Fördern des Ernteguts auf seiner Umfangsfläche 29 mit Mitnahmeelementen 30 versehen. Die Drehrichtung des Abscheiderotors 24 bzw. die Gutflussrichtung ist durch einen Pfeil FR gekennzeichnet.

Der mindestens eine siebartige Abscheidekorb 26 weist eine Vielzahl von Durchtrittsöffnungen auf, durch die Korn aus einem dem Abscheideaggregat 7 zugeführten Erntegutstrom abgeschieden wird. Der Deckel 27 weist auf seiner dem Abscheiderotor 24 zugewandten Innenseite, die nachfolgend als Mantelfläche 31 bezeichnet wird, eine Vielzahl von koaxial zur Längsachse des Abscheiderotors 24 nebeneinander angeordneten Leitelementen 32 auf, die sich abschnittsweise in radialer Richtung des Deckels 27 erstrecken. Die Leitelemente 32 sind spiralförmig an der Mantelfläche 31 angeordnet.

Die Mantelfläche 31 des in Fig. 2 dargestellten Deckels 27 ist gestuft ausgeführt, wobei die Mantelfläche 31 in der in Fig. 2 dargestellten Ausführung in Umfangsrichtung bzw. in Drehrichtung des Abscheiderotors 24 eine Mehrzahl von hintereinander angeordneten Stufen 33 umfasst. Die Stufen 33 sind jeweils rampenförmig ausgebildet, sodass ein entlang der Mantelfläche 31 geführter Erntegutstrom durch die Stufen 33 eine Ablenkung in Richtung des Abscheiderotors 24 erfährt. Die Stufen 33 sind in Umfangsrichtung des Gehäuses 25 äquidistant zueinander angeordnet. Die Mantelfläche 31 ist entlang ihrer gesamten Ausdehnung in Umfangsrichtung gestuft ausgeführt. Zwischen zwei benachbarten Leitelementen 32 befindet sich jeweils ein Kanal 34, durch den hindurch sich die Stufen 33 erstrecken. Hier und vorzugsweise besteht die Mantelfläche 31 aus miteinander verbundenen Stufen 33, sodass sich eine einteilige Mantelfläche 31 ausbildet. In dem in Fig. 2 gezeigten Ausführungsbeispiel umfasst die Mantelfläche 31 dreizehn hintereinander angeordnete Stufen 33. In einer alternativen Ausgestaltung kann die Mantelfläche 31 zumindest sieben Stufen 33, vorzugsweise jedoch mindestens neun Stufen 33 umfassen.

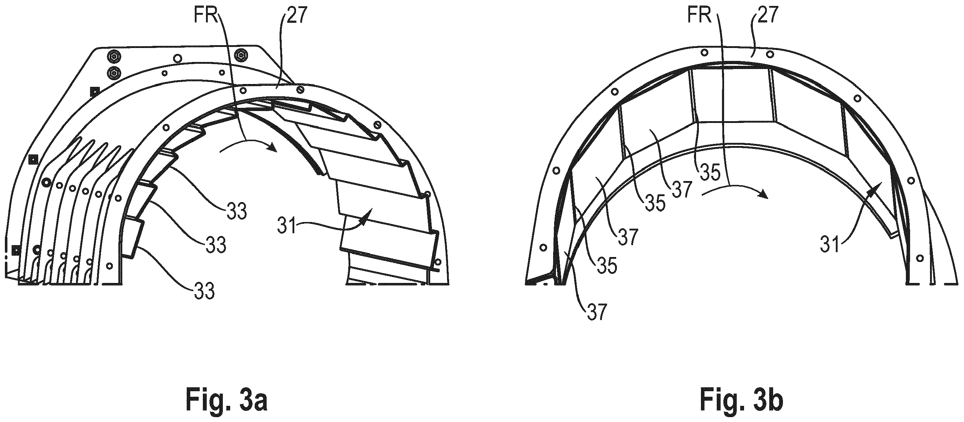

Fig. 3a und 3b zeigen jeweils einen Deckel 27 mit einer gestuften Mantelfläche 31, wobei der Abscheiderotor 24, der Abscheidekorb 26 sowie die Leitelemente 32 hier nicht dargestellt sind. Fig. 3a zeigt die Ausgestaltung der gestuften Mantelfläche 31 mit einer Mehrzahl von Stufen 33. Die Drehrichtung des hier nicht dargestellten Abscheiderotors 24 bzw. die Gutflussrichtung ist durch den Pfeil FR gekennzeichnet.

Fig. 3b zeigt eine zu der Ausführung gemäß Fig. 3a alternative Ausgestaltung, wobei die gestufte Mantelfläche 31 von einer Mehrzahl von Kanten 35 gebildet ist. Die Mantelfläche 31 umfasst eine Mehrzahl von flächigen Abschnitten 37. Die flächigen Abschnitte 37 sind jeweils unter Ausbildung einer Kante 35 miteinander verbunden. Hier und vorzugsweise erstrecken sich die Kanten 35 achsparallel zu der Längsachse 28 des Abscheiderotors 24. Obgleich in Fig. 3b keine Leitelemente 32 dargestellt sind, liegt es im Rahmen der Erfindung entsprechende Leitelemente 32 auf der dem Abscheiderotor 24 zugewandten Seite der Mantelfläche 31 anzuordnen. In dem hier gezeigten Ausführungsbeispiel umfasst die Mantelfläche 31 sieben flächige Abschnitte 37, die unter Ausbildung von sechs Kanten 35 miteinander verbunden sind.

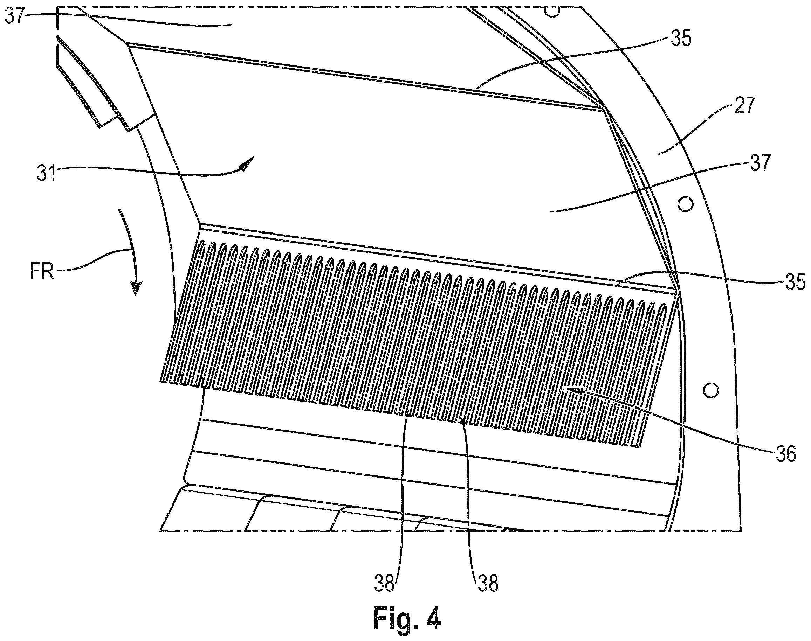

Fig. 4 zeigt einen Deckel 27 mit einer Mantelfläche 31. Die hier dargestellte gestufte Mantelfläche 31 umfasst eine Mehrzahl von Kanten 35. An der Mantelfläche 31 befindet sich ein Rechen 36. Der Rechen 36 ist in bestimmungsgemäßer Gutflussrichtung FR des Abscheideaggregats 7 betrachtet den Kanten 35 nachgeordnet. Der Rechen 36 umfasst eine Mehrzahl von Fingern 38, die in radialer Richtung hin zu dem Abscheiderotor 24 vorstehen. Es liegt im Rahmen der Erfindung einen entsprechenden Rechen 36 gleichermaßen an einer Mantelfläche 31 mit Stufen 33 anzuordnen.

### Bezugszeichenliste:

| | | | |
|---|---|---|---|
| 1 | Mähdrescher | 34 | Kanal |
| 2 | Maschinengehäuse | 35 | Kante |
| 3 | Vorsatzgerät | 36 | Rechen |
| 4 | Erntegut | 37 | Flächiger Abschnitt |
| 5 | Schrägförderer | 38 | Finger |
| 6 | Dreschvorrichtung | | |
| 7 | Abscheideaggregat | | |
| 8 | Siebanordnung | | |
| 9 | Dreschtrommel | | |
| 10 | Dreschkorb | | |
| 11 | Teilstrom | | |
| 12 | Teilstrom | | |
| 13 | Vorbereitungsboden | | |
| 14 | Obersieb | | |
| 15 | Untersieb | | |
| 16 | Reinigungsgebläse | | |
| 17 | Zuführtrommel | | |
| 18 | Körnerstrom | | |
| 19 | Rücklaufboden | | |
| 20 | Auffang- und Führungsboden | | |
| 21 | Kornförderschnecke | | |
| 22 | Elevator | | |
| 23 | Korntank | | |
| 24 | Abscheiderotor | | |
| 25 | Gehäuse | | |
| 26 | Abscheidekorb | | |
| 27 | Deckel | | |
| 28 | Längsachse | | |
| 29 | Umfangsfläche | | |
| 30 | Mitnahmeelement | | |
| 31 | Mantelfläche | | |
| 32 | Leitelement | | |
| 33 | Stufe | | |

## Patentansprüche

1. Abscheideaggregat (7) für einen selbstfahrenden Mähdrescher (1), welches nach dem Axialflussprinzip arbeitet, umfassend einen drehbar gelagerten Abscheiderotor (24) der in einem Gehäuse (25) angeordnet ist, das einen mit Öffnungen versehenen Abscheidekorb (26) und einen eine geschlossene Mantelfläche (31) aufweisenden Deckel (27) umfasst,
**dadurch gekennzeichnet, dass**
die Mantelfläche (31) auf ihrer dem Abscheiderotor (24) zugewandten Seite stufig ausgeführt ist.

2. Abscheideaggregat (7) nach Anspruch 1, **dadurch gekennzeichnet, dass** die stufig ausgeführte Mantelfläche (31) eine Mehrzahl von in Umfangsrichtung des Gehäuses (25) hintereinander angeordneten Stufen (33) umfasst.

3. Abscheideaggregat (7) nach Anspruch 2, **dadurch gekennzeichnet, dass** sich die Stufen (33) jeweils achsparallel zu der Längsachse (28) des Abscheiderotors (24) erstrecken.

4. Abscheideaggregat (7) nach Anspruch 1, **dadurch gekennzeichnet, dass** die stufig ausgeführte Mantelfläche (31) eine Mehrzahl von in Umfangsrichtung des Gehäuses (25) hintereinander angeordnete Kanten (35) umfasst.

5. Abscheideaggregat (7) nach Anspruch 4, **dadurch gekennzeichnet, dass** sich die Kanten (35) jeweils achsparallel zu der Längsachse (28) des Abscheiderotors (24) erstrecken

6. Abscheideaggregat (7) nach einem der Ansprüche 4 bis 5, **dadurch gekennzeichnet, dass** die Mantelfläche (31) eine Mehrzahl von flächigen Abschnitten (37) aufweist, die jeweils unter Ausbildung einer Kante (35) miteinander verbunden sind.

7. Abscheideaggregat (7) nach einem der Ansprüche 1 bis 6, **dadurch gekennzeichnet, dass** die Mantelfläche (31) über ihre gesamte sich in Umfangsrichtung erstreckende Ausdehnung gestuft ausgeführt ist.

8. Abscheideaggregat (7) nach einem der Ansprüche 1 bis 7, **dadurch gekennzeichnet, dass** die Mantelfläche (31) auf ihrer dem Abscheiderotor (24) zugewandten Seite eine Vielzahl von koaxial zur Längsachse (28) des Abscheiderotors (24) nebeneinander angeordneten Leitelementen (32) aufweist, wobei zwischen zwei benachbarten Leitelementen (32) zumindest abschnittsweise ein gestufter Kanal (34) ausgebildet ist.

9. Abscheideaggregat (7) nach einem der Ansprüche 1 bis 8, **dadurch gekennzeichnet, dass** die Mantelfläche (31) einteilig ausgebildet ist.

10. Abscheideaggregat (7) nach einem der Ansprüche 1 bis 9, **dadurch gekennzeichnet, dass** an der Mantelfläche (31) ein Rechen (36) angeordnet ist.
